# EUROPEAN PATENT APPLICATION

(11) **EP 4 831 694 A1**
(43) Date of publication of application: **28.10.2026**
(21) Application number: 23962287.1
(22) Date of filing: 22.12.2023
(51) Int. Cl.: G01V 8/20, G01J 1/02, G08B 13/183

(54) **HUMAN DETECTION SENSOR DEVICE**

(71) Applicant: Optex Co., Ltd., Otsu-shi, Shiga 520-0101 (JP)
(72) Inventor: TOMOOKA, Hiroyuki, Otsu-shi, Shiga 520-0101 (JP)
(74) Representative: Müller Hoffmann & Partner
(86) International application number: PCT/JP2023/046204
(87) International publication number: WO 2025/134368

(57) **Abstract**

The present invention provides a human detection sensor device that makes it possible to ensure accuracy when detecting a human while reducing false alarms caused by small animals and the like. This human detection sensor device is mounted at a position higher than a ground surface or a floor surface and detects a person who has entered a predetermined detection area, and is provided with three or more infrared sensors that each independently detect an amount of variation in incident infrared light, an optical mechanism that sets unit zones, which are angular ranges of infrared light that is incident on the infrared sensors, and a determination mechanism that outputs a human detection signal indicating that a human has been detected based on the amount of variation in the incident infrared light detected by the infrared sensors, wherein the optical mechanism forms a unit area in which the unit zones of the respective infrared sensors are arranged one above the other, and also forms the detection area in which a plurality of the unit areas are arranged vertically, and, in a case in which the determination mechanism has determined that all the amounts of variation in the incident infrared light detected by the respective infrared sensors have exceeded a predetermined level, then the determination mechanism outputs the human detection signal.

## Description

### [Technical Field]

The present invention relates to a human detection sensor device.

### [Technical Background]

Conventionally, a human detection sensor device that is mounted at a position higher than a ground surface or a floor surface, and that detects a person who has entered a predetermined detection area has been developed. This device is equipped with two infrared sensors and, in a case in which an object moves across both unit zones of the two infrared sensors at the same time, detects that a human is present (see Patent Document 1). Here, the term 'unit zone' refers to an angular range of infrared light that is incident on the infrared sensors.

If AND detection is performed using two infrared sensors in this way, then compared with a case in which a human is detected using a single infrared sensor, it is possible to reduce false alarms caused, for example, by small animals entering a predetermined area.

### [Documents of the Prior Art]

### [Patent Documents]

[Patent Document 1] Japanese Patent Publication No. 2021-071746

### [Disclosure of the Invention]

### [Problems to be Solved by the Invention]

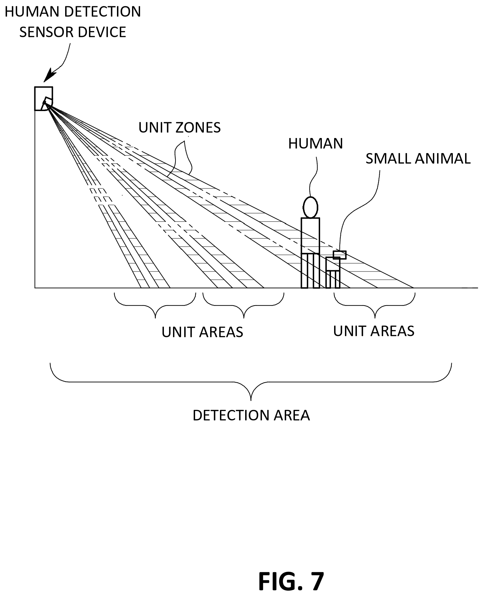

However, even if AND detection is performed using two infrared sensors, as is shown in FIG. 7, there may still be cases in which a small animal moves across both unit zones of the two infrared sensors at the same time and, in cases such as this, a false alarm is generated.

Here, increasing the gaps between the respective unit zones in order to prevent small animals and the like from being erroneously detected may be considered, however, this method would reduce the density of the unit zones of the infrared sensors in the detection area, so that the human detection accuracy would also be reduced.

The present invention was therefore conceived in order to solve the above-described problems, and it is a principal object thereof to provide a human detection sensor device that is able to ensure accuracy when detecting a human while reducing false alarms caused by small animals and the like.

### [Means for Solving the Problem]

The present invention has the following structure.
[1] A human detection sensor device that is mounted at a position higher than a ground surface or a floor surface and detects a person who has entered a predetermined detection area is characterized in being provided with three or more infrared sensors that each independently detect an amount of variation in incident infrared light, an optical mechanism that sets unit zones, which are angular ranges of infrared light that is incident on the infrared sensors, and a determination mechanism that outputs a human detection signal indicating that a human has been detected based on the amount of variation in the incident infrared light detected by the infrared sensors, wherein the optical mechanism forms a unit area in which the unit zones of the respective infrared sensors are arranged one above the other, and also forms the detection area in which a plurality of the unit areas are arranged vertically, and, in a case in which the determination mechanism has determined that all the amounts of variation in the incident infrared light detected by the respective infrared sensors have exceeded a predetermined level, then the determination mechanism outputs the human detection signal.
   According to a human detection sensor device that is configured in the above-described manner, because three or more infrared detection sensors are provided, and because a human is determined to have been detected in a case in which all of these infrared sensors have reacted, it is possible to reduce false alarms caused by small animals and the like. Moreover, because a human detection signal is not output if an object only interferes with two unit zones, it is possible to narrow the gaps between the unit zones of the respective infrared sensors, and to thereby ensure accuracy when detecting a human.
[2] In the human detection sensor device according to [1], the infrared sensors may also be configured in such a way that two PIR elements are connected in series in reverse polarity, and the total of three infrared sensors are achieved by using a quad-type device in which two infrared sensors are provided side-by-side within a single casing, and a dual-type device in which one infrared sensor is provided in a single casing.
   If this type of configuration is employed, then because three infrared sensors are provided using two devices, it is possible to inhibit any increases in both cost and size compared to a configuration that uses three devices.
[3] The human detection sensor device according to [2] may also have a structure in which the unit areas are formed such that the unit zones of the dual-type infrared sensor are positioned between the unit zones of the two quad-type infrared sensors.
   If this type of structure is employed, then because the gaps between two unit zones of the quad-type device can be filled by a unit zone of the dual-type device, it is possible to increase the density of the detection area and ensure accuracy when detecting a human.
[4] The human detection sensor device according to [1] may also have a structure in which three of the infrared sensors are used, and the placement sequence of the unit zones within a unit area differs between the unit areas for long-range detection which are located on the upper side from among the unit areas, and the unit areas for short-range detection which are located on the lower side from among the unit areas.
   If this type of structure is employed, then, compared with a case in which the placement sequence of unit zones is the same in each unit area, it is possible to effortlessly ensure the field of each unit area that is required in order to detect a human and to not detect a small animal or other object at both long distances and short distances within the detection area.
[5] The human detection sensor device according to [1] may also have a structure in which a first level and a second level that is lower than the first level are set as the predetermined levels, and the determination mechanism outputs the human detection signal in a case in which it determines that a certain number of the incident infrared ray variation amounts detected by the respective infrared ray sensors exceed the first level, and the remainder thereof exceed the second level.
   If this type of structure is employed, then because a first level and a second level that each have mutually different values are provided as the predetermined levels, there is a greater degree of freedom when setting the magnitude of the reference values for these two levels, and when determining which infrared sensors should be set to which level, and the like. As a result, there is a greater degree of flexibility when determining a location to install the human detection sensor device, and it becomes possible to satisfy the required level of human detection accuracy while minimizing false alarms.
[6] The human detection sensor device according to [1] may also have a structure in which, within the detection area, objects exceeding a certain height interfere with the unit zones of the respective infrared sensors, and objects that are below the certain height and are also within a predetermined size when looked at in plan view interfere only with the unit zones of a portion of the infrared sensors from among the respective infrared sensors, or alternatively do not interfere with the unit zones of any of the infrared sensors.

If this type of structure is employed, then if, for example, the certain height is set to match the height of a human and the predetermined size is set to be larger than the body length or the like of small animals whose detection is not desired, a human will interfere with all of the respective unit zones of the plurality of infrared sensors in the detection area, while small animals will not interfere with all of the respective unit zones. As a result, it is possible to reduce false detections caused by small animals and the like, while ensuring the accuracy of human detection.

### [Effects of the Invention]

According to the present invention which is formed in the manner described above, it is possible to ensure accuracy when detecting a human while reducing false alarms caused by small animals and the like.

### [Brief Description of the Drawings]

[FIG. 1] FIG. 1 overall schematic view showing a human detection sensor device according to an embodiment of the present invention.
[FIG. 2] FIG. 2 is a function block diagram showing the human detection sensor device according to the same embodiment.
[FIG. 3] FIG. 3 is a front view showing the human detection sensor device according to the same embodiment.
[FIG. 4] FIG. 4 is a side view showing the human detection sensor device according to the same embodiment.
[FIG. 5] FIG. 5 is an enlarged top view showing a lens of the human detection sensor device according to the same embodiment.
[FIG. 6] FIG. 6 is an explanatory view showing a detection area of the human detection sensor device according to the same embodiment.
[FIG. 7] FIG. 7 is an explanatory view showing a detection area of a conventional human detection sensor device.

### [Best Embodiments for Implementing the Invention]

Hereinafter, a first embodiment of a heat exchanger according to the present invention will be described with reference to the drawings.

### [First Embodiment]

### 1. Overall Structure

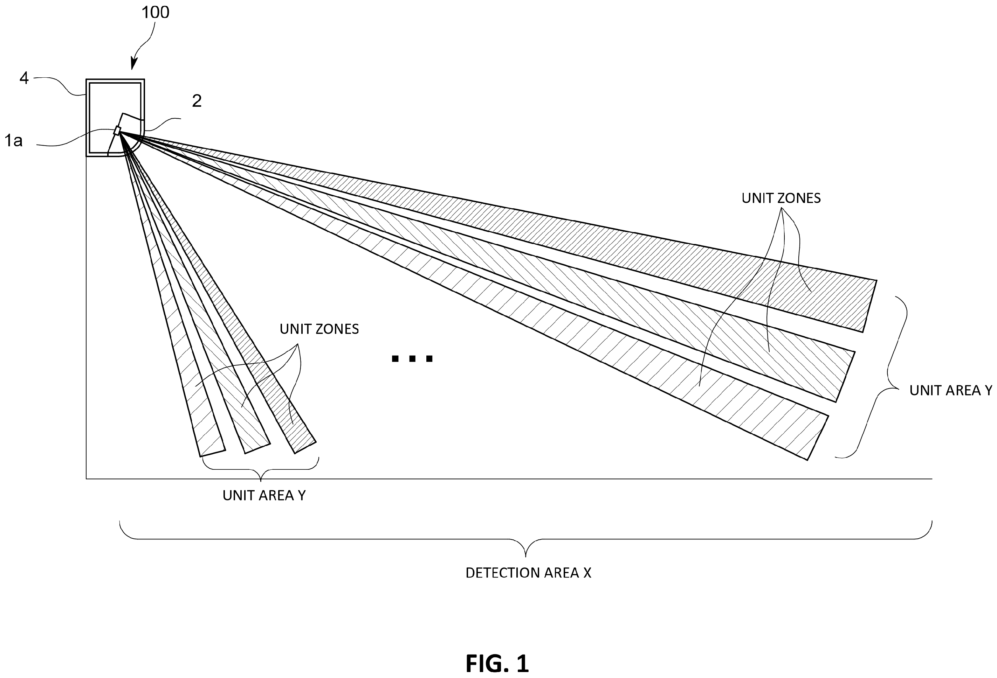

As is shown in FIG. 1, a human detection sensor device 100 of the present embodiment is mounted at a position that is higher than a ground surface or a floor surface, and detects a human who has entered a predetermined detection area X.

This human detection sensor device 100 is provided with three infrared sensors 1 that each independently detect an amount of variation in incident infrared light, an optical mechanism 2 that forms a predetermined detection area X, a determination mechanism 3 that outputs a human detection signal indicating that a human has been detected based on the amount of variation in the incident infrared light detected by the infrared sensors 1, and a housing 4 that houses the infrared sensors 1, the optical mechanism 2 and the determination mechanism 3.

The housing 4 is a formed in a vertically elongated, substantially quadrangular prism shape whose rear surface or top surface is mounted on a wall, pillar, or ceiling or the like so that a front surface thereof faces towards the predetermined detection area X. The housing 4 is mounted, for example, at a height of approximately 2 to 6 m above the ground surface or floor surface.

The detection area X is formed by a plurality of unit areas Y, and each unit area Y is formed by combining a plurality of unit zones.

### 2. Device Structure

### 2-1. Infrared Sensors 1

The infrared sensors 1 detect variation amounts in incident infrared light, and emit output signals indicating those variation amounts.

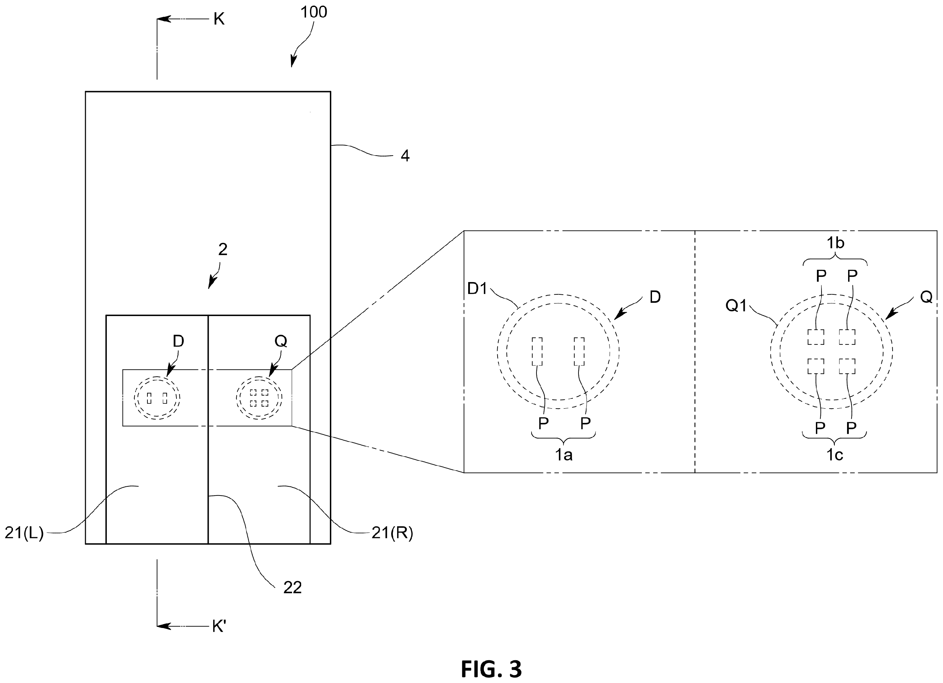

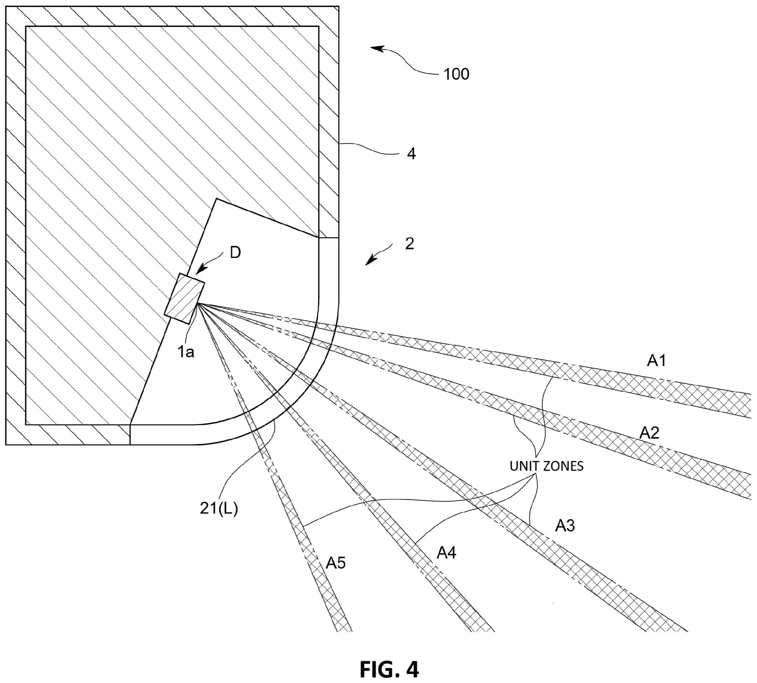

The infrared sensors 1 each have a structure in which two PIR elements are connected in series in reverse polarities. As is shown in FIG. 3 and FIG. 4, the PIR elements of the present embodiment are pyroelectric elements P, and are configured so that if, for example, infrared light strikes two pyroelectric elements P connected in series in reverse polarity at the same time, the outputs therefrom are canceled.

The human detection sensor device 100 of the present embodiment is provided with three infrared sensors 1. One of these, namely, an infrared sensor 1a, is disposed within a sensor casing D1 of a dual-type device D, while the remaining two infrared sensors 1b and 1c are disposed side-by-side within a sensor casing Q1 of a single quad-type device Q.

The two pyroelectric elements P located in the dual-type device D are arranged so as to be mutually adjacent to each other on the left and right.

The quad-type device Q has four pyroelectric elements P. These four pyroelectric elements P are arranged in a matrix formation, with two mutually adjacent pyroelectric elements P on the left and right being connected in series in reverse polarity so as to form a single infrared sensor 1. In this way, the quad-type device Q is equipped with two infrared sensors 1b and 1c, with the infrared sensor 1b being located above the infrared sensor 1c. The two infrared sensors 1b and 1c detect infrared light independently of each other.

As shown in FIG. 3, the dual-type device D and the quad-type device Q are mounted on an inner wall of the housing 4 so as to be mutually adjacent to each other on the left and right sides and at the same height. The infrared sensors 1 of each device D and Q are arranged so that the respective pyroelectric elements P face diagonally downwards and forwards at substantially the same angle when looked at in side view.

### 2-2. Optical Mechanism 2

The optical mechanism 2 forms a predetermined detection area X and, as is shown in FIG. 3 and FIG. 4, covers a portion of the front surface and a portion of the bottom surface of the housing 4. The optical mechanism 2 has a plurality of lenses 21 that are disposed so as to face the pyroelectric elements P of the infrared sensor 1. Note that FIG. 4 is a cross-sectional view taken along a cross-section K-K' in FIG. 3 of the human detection sensor device 100.

The lenses 21 focus infrared light from within the detection area X so that this infrared light is incident onto the respective infrared sensors 1.

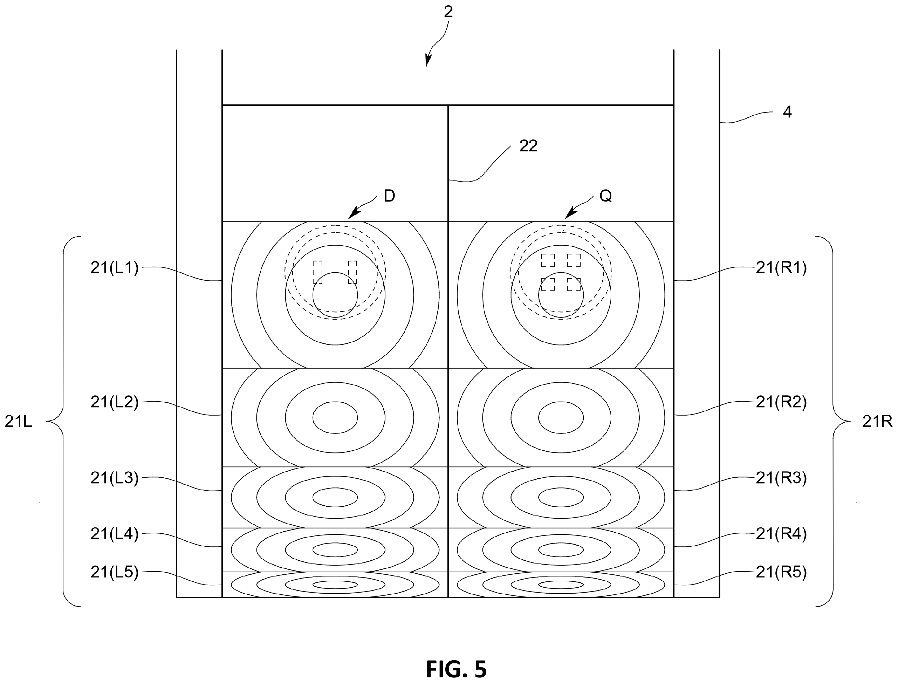

As shown in FIG. 5, the plurality of lenses 21 are arranged in two rows, one on the left and one on the right, in the vertical direction when viewed from the front. In order to differentiate between the respective lenses 21, the lenses arranged on the left side (hereinafter, these may also be referred to as the left lenses) are indicated by (L), the lenses arranged on the right side (hereinafter, these may also be referred to as the right lenses) are indicated by (R), and the lenses arranged vertically from top to bottom are indicated by (1), (2), (3), and the like. For example, the uppermost lens on the left side is designated as lens 21 (L1).

The left lens 21(L) is located in front of the dual-type device D so that infrared light is converged onto the infrared sensor 1a. The right lens 21(R) is located in front of the quad-type device Q so that infrared light is converged onto the infrared sensors 1b and 1c.

The lenses 21 of the present embodiment are Fresnel lenses, and each Fresnel lens is disposed so as to be connected to the adjacent Fresnel lenses located above and below it.

The number of left lenses 21 (L) and the number of right lenses 21 (R) are configured so as to be the same as each other and, in the present embodiment, five lenses 21 are arranged vertically on the left and five lenses 21 are arranged vertically on the right.

The five left lenses 21 (L1) to 21 (L5) and the five right lenses 21 (R1) to 21 (R5) are each stacked in a vertical direction so as to be adjacent to each other on the left and right sides. For example, the topmost left lens 21 (L1) and the topmost right lens 21 (R1) are adjacent to each other on the left and right.

A shielding component 22 is provided between the mutually adjacent left lens 21 (L) and right lens 21 (R). In the present embodiment, the plate-shaped shielding component 22 is provided on the inner wall of the housing 4, so that, for example, infrared light passing through the left lens 21 (L1) is not incident on the infrared sensors 1b and 1c.

### 2-3. Determination Mechanism 3

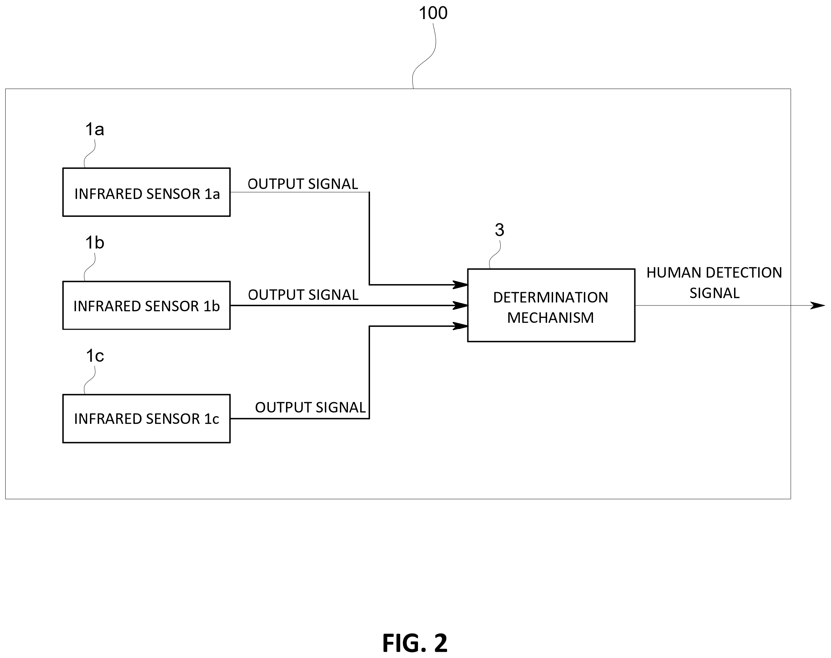

As shown in FIG. 2, in a case in which the determination mechanism 3 has determined that the amounts of variation in the incident infrared light detected by the respective infrared sensors 1 have all exceeded a predetermined level, it outputs a human detection signal indicating that a human has been detected.

More specifically, the determination mechanism 3 receives output signals from the three infrared sensors 1 and compares the respective amounts of variation in the incident infrared light indicated by each output signal with a predetermined level. A human detection signal is output in a case in which the amounts of variation in the incident infrared light detected at substantially the same timings in the three infrared sensors 1a to 1c all exceed the predetermined level.

The determination mechanism 3 is provided, for example, with an analog circuit that includes a comparator or the like, an AD converter, and a digital electrical circuit such as a computer or PLD or the like.

### 3. Detection Area X

The detection area X of the human detection sensor device 100 is formed by the optical mechanism 2.

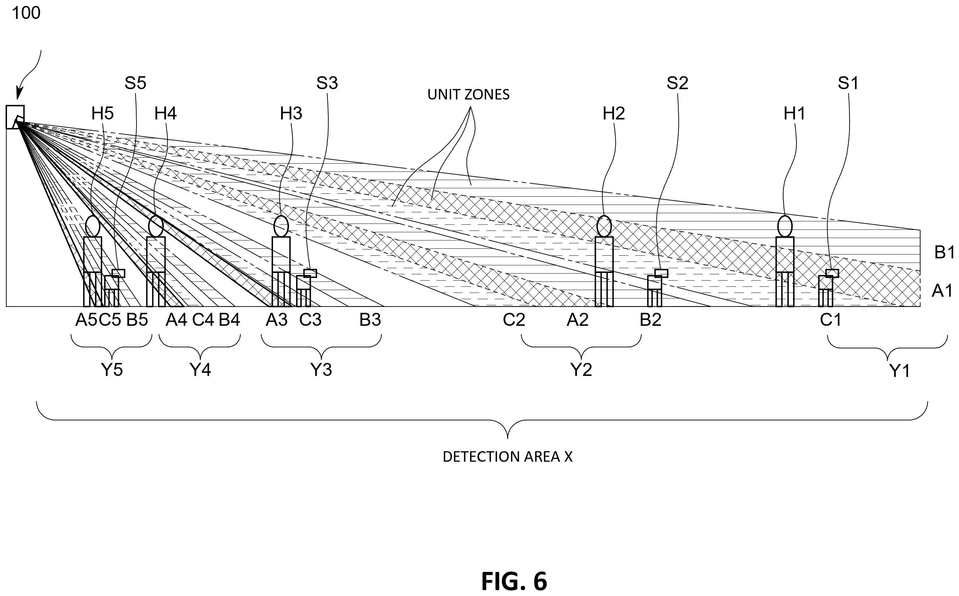

As shown in FIG. 6, the detection area X is formed by a plurality of unit areas Y arranged in a vertical direction when looked at in side view, and each unit area Y is configured so as to be formed by combining a plurality of unit zones.

### 3-1. Unit Zones

As is shown in FIG. 4, a unit zone is the angular range of infrared light that passes through the lenses 21 and is incident on the infrared sensors 1, and is determined by the focal length of the lenses 21. The unit zones of the three infrared sensors 1 of the present embodiment extend towards the ground surface or the floor surface.

The respective infrared sensors 1 are configured so that infrared light from a plurality of mutually different angular ranges is incident thereon, and a plurality of the unit zones are formed for each infrared sensor 1. In the detection area X, the plurality of unit zones of one infrared sensor 1 are located in the gaps between the plurality of unit zones of other infrared sensors 1, as shown in FIG. 6, so that the unit zones of the same infrared sensor 1 are not mutually adjacent to each other.

In the present embodiment, the five unit zones A1 to A5 of the infrared sensor 1a are set so as to correspond to the five left lenses 21 (L1) to 21 (L5), as shown in FIG. 6. In addition, the five unit zones B1 to B5 of the infrared sensor 1b and the five unit zones C1 to C5 of the infrared sensor 1c are set so as to correspond to the five right lenses 21 (R1) to 21 (R5).

The plurality of unit zones of the respective infrared sensors 1 are arranged vertically so as not to overlap each other when looked at in side view. At this time, each lens is configured so that the inclination relative to the ground surface of the unit zones corresponding to the upper lens 21 is gentler than the inclination relative to the ground surface of the unit zones corresponding to the lower lens 21, and the respective unit zones are arranged in sequence from above, starting with the unit zone of the upper lens 21. By employing this type of arrangement, the unit zones on the upper side are able to detect a human at a further distance, while the unit zones on the lower side are able to detect a human at a closer distance.

### 3-2. Unit Areas Y

As is shown in FIG. 6, each unit area Y is formed by combining the unit zones of a plurality of infrared sensors 1. In the present embodiment, one unit area Y contains one unit zone of each of the three infrared sensors 1a, 1b, and 1c.

More specifically, each unit area Y is formed by combining the unit zones set by one left lens 21 (L) and one right lens 21 (R) that are mutually adjacent to each other. For example, the three unit zones A1, B1, and C1 set by the mutually adjacent left lens 21 (L1) and right lens 21 (R1) are combined to form a single unit area Y1.

In each unit area Y, the unit zones are arranged so as to be offset from each other vertically so as to not overlap with each other when looked at in side view. The unit areas Y of the present embodiment include areas where unit zones are arranged without any gaps between them (for example, Y1, Y2), and areas where unit zones are arranged with gaps between them (for example, Y3 to Y5).

### 3-3. Detection Area X

As is shown in FIG. 6, the detection area X is formed by combining together a plurality of unit areas Y. In the present embodiment, the detection area X is formed by five unit areas Y1 to Y5, which are arranged vertically with gaps between them so that they do not overlap each other. Note that it is also possible for the respective unit areas Y to overlap each other, however, in that case, while an increase in the density of the detection area X can be achieved, the overall detection area X may become narrower.

In the detection area X of the present embodiment, the upper-side unit areas Y1 and Y2 function as areas for detecting a human at a further distance, while the lower-side unit areas Y3, Y4, and Y5 function as areas for detecting a human at a closer distance. In order to accurately detect a human at any distance, a structure is employed in which the placement sequence of unit zones within each unit area is different between the unit areas for long-range detection and the unit areas for short-range detection.

### 3-4. Unit Areas Y1 and Y2 for Long-Range Detection

In the long-range detection unit areas Y1 and Y2, as is shown in FIG. 6, the unit zones A of the infrared sensor 1a of the dual-type device D are positioned between the unit zones B and C of the two infrared sensors 1b and 1c of the quad-type device Q. For example, in the unit area Y1, the unit zones are arranged from top to bottom in the sequence B1, A1, and C1.

Moreover, in each of the respective long-range detection unit areas Y1 and Y2, the unit zones are each arranged with no gaps between them.

### 3-5. Unit Areas Y3, Y4 and Y5 for Short-Range Detection

In the short-range detection unit areas Y3, Y4 and Y5, as is shown in FIG. 6, the unit zones A of the infrared sensor 1a of the dual-type device D are positioned beneath the unit zones B and C of the two infrared sensors 1b and 1c of the quad-type device Q. For example, in the unit area Y3, the unit zones are arranged from top to bottom in the sequence B3, C3, and A3.

In each of the respective short-range detection unit areas Y3, Y4 and Y5, the respective unit zones are each arranged so that gaps are provided between themselves and the other unit zones.

### 4. Operation

In the detection area X that is configured in the manner described above, the human detection sensor device 100 detects an object that simultaneously interferes with the unit zones of each infrared sensor 1 as a human. In other words, it detects as a human any object that exceeds a certain height when looked at in side view.

In other words, the unit zones are arranged so that an object of a certain height (for example, the average height of an adult) when looked at in side view interferes with the vertically aligned unit zones of the three infrared sensors 1.

For example, a human H1 shown in FIG. 6 is detected because they interfere with all of the unit zones A1 to C1 of the unit area Y1. Moreover, a human H2 is detected because they interfere with the unit zones A1 and C1 of the unit area Y1, and with the unit zones of the three infrared sensors 1a to 1c in the unit zone B2 of the unit area Y2.

In contrast, because a small animal S1 only interferes with the unit zones A1 and C1 of the two infrared sensors 1a and 1c out of the three infrared sensors 1a to 1c, this small animal S1 is not detected.

Moreover, the arrangement of the unit zones in the human detection sensor device 100 is adjusted so as to prevent the false detection of small animals and the like. Namely, the human detection sensor device 100 is configured so as not to detect, as being human, objects that are below a certain height when looked at in side view and are within a certain size when looked at in plan view.

In other words, the unit zones are arranged such that an object (for example, a small animal such as a dog) that is below a certain height when looked at in side view and is within a certain size when looked at in plan view only interferes with the unit zones of a portion of the infrared sensors from among the 3 infrared sensors 1, or does not interfere with the unit zones of any of the infrared sensors from among the 3 infrared sensors 1.

Here, the term plan view refers to viewing a predetermined detection area X of the human detection sensor device 100 from directly above. In the present embodiment, the size of an object as seen in plan view is the same as the size in the horizontal direction (i.e., in further and nearer directions) of the object as seen in side view.

For example, in the human detection sensor device 100 of the present embodiment, as is shown in FIG. 6, gaps are provided between the unit zones A5, C5, and B5 in order to spread these three unit zones out, so that a small animal S5 interferes only with the unit zones B5 and C5 of the infrared sensors 1b and 1c, which are only a portion of the three infrared sensors 1a to 1c.

### 5. Effects

According to the human detection sensor device 100 of the first embodiment that is configured in the manner described above, three infrared detection sensors 11 are provided, and because a human is determined to have been detected in a case in which all of these infrared sensors 1 have reacted, it is possible to reduce false alarms caused by small animals and the like.

Moreover, since a human detection signal is not output by an object interfering with only two unit zones, the gap between the unit zones of the respective infrared sensors 1 can be narrowed, so that the human detection accuracy can be ensured. For example, as in the unit areas Y1 and Y2 shown in FIG. 6, it is also possible to provide the respective unit zones without any gaps.

The three infrared sensors 1 are prepared using two devices (i.e., the dual-type device D and quad-type device Q). As a result, it is possible to inhibit any increases in both cost and size compared to a structure that uses three devices.

In the right lens 21 (R) a structure is employed that enables infrared light to be irradiated onto both of the two infrared sensors 1b and 1c of the quad-type device Q. Because of this, the device can be simplified and cost reductions achieved compared to a structure in which each of the two infrared sensors 1b and 1c has a different optical mechanism.

It should be noted that, in the right lens 21 (R), if the unit zones B and C of both of the two infrared sensors 1b and 1c in the quad-type device Q are set, then it is not possible to adjust these two unit zones B and C independently. As a consequence, the degree of freedom when setting the layout for the detection area X is reduced, and there is a concern that it will become difficult to form a detection area X and the like that will make it possible to accurately detect humans at various distances.

In order to address this concern, in the present embodiment a structure is employed in which the positional relationships between the unit zones B and C of the quad-type device Q and the unit zone A of the dual-type device D are configured differently in the long-range detection unit areas Y1 and Y2 as compared to in the short-range detection unit areas Y3, Y4 and Y5.

In other words, in the long-distance detection unit areas Y1 and Y2, by locating the unit zone A between the two unit zones B and C that are separated from each other, it is possible to increase the density of the detection area X at long-range, and to thereby ensure a high level of human detection accuracy.

In contrast, in the unit areas Y3, Y4, and Y5 that are used for close-range detection, because the unit zone A is located below the two densely packed unit zones B and C, it is possible to widen the detection area X at close-range, and to thereby reduce false alarms caused by small animals and the like.

Moreover, in the long-range detection unit areas Y1 and Y2, by arranging the respective unit zones such that there are no gaps between them, it is possible to further increase the density of the detection area X at long-range. On the other hand, in the short-range detection unit areas Y3, Y4, and Y5, by arranging the respective unit zones such that gaps are provided between these unit zones and the other unit zones, it is possible to achieve a further widening of the detection area X at short-range.

As shown in FIG. 6, because a structure is employed in which two unit zones of the same infrared sensor 1 are not positioned consecutively to each other in the detection area X, a human such as the human H2 who is present across the two unit areas Y1 and Y2 can be detected if they interfere with the three unit zones that are arranged vertically, so that the human detection accuracy in the detection area X can be ensured.

Because the dual-type device D and the quad-type device Q are positioned adjacently to each other on the left and right, the advantage is obtained that a portion of the design of the left and right lenses 21 can be shared.

### [Second Embodiment]

The determination mechanism 3 of the above-described embodiment outputs a human detection signal indicating that a human has been detected in a case in which it has been determined that the amounts of variation in the incident infrared light detected by the respective infrared sensors 1 all exceed a single predetermined level.

In contrast to this, in the determination mechanism of the second embodiment, a first level and a second level that is lower than the first level are set as predetermined levels, and the determination mechanism outputs a human detection signal in a case in which a certain number of the incident infrared variation amounts detected by the respective infrared sensors exceed the first level, while the remainder thereof exceed the second level.

If this type of structure is employed, then because a first level and a second level that each have mutually different values are provided as the predetermined levels, there is a greater degree of freedom when setting the magnitude of the reference values for these two levels, and when determining which infrared sensors should be set to which level, and the like. As a result, there is a greater degree of flexibility when determining a location to install the human detection sensor device, and it becomes possible to satisfy the required level of human detection accuracy while minimizing false alarms.

Note that three or more predetermined levels may be set and, for example, it is also possible for a different predetermined level to be set for each infrared sensor 1.

### [Additional Embodiments]

It is also possible for a human detection sensor device according to the present invention to be used to detect objects other than humans.

The human detection sensor device 100 of the above-described embodiment is a high-mount installation type of sensor device that is mounted at a height of approximately 2 to 6 m above the ground surface, however, it is also possible for the human detection sensor device to be a low-mount installation type that is installed at a height of approximately 1 m above the ground surface, or for it to be installed at a greater height than 2 to 6 m above the ground surface.

It is also possible for the infrared sensor 1 to be another type of element that detects infrared light, such as a thermopile element or a bolometer element or the like. Alternatively, it is also possible for the infrared sensor to be provided in a single-type device equipped with only one element.

It is also possible for four or more infrared sensors to be installed. In this case, the determination mechanism may output a human detection signal in a case in which it is determined that the amounts of variation in the incident infrared light detected by all of the infrared sensors out of the four or more infrared sensors exceed a predetermined level, or it may output a human detection signal in a case in which it is determined that the amounts of variation in the incident infrared light detected by a predetermined number of (i.e., three or more) infrared radiation sensors exceed a predetermined level.

Which types of devices are to be used in combination, and whether or not a plurality of infrared sensors are to be used may also be freely determined. For example, it is also possible to configure a human detection sensor system using two quad-type devices. It is sufficient if AND human detection can be performed based on the detection results of at least three or more infrared sensors.

Devices equipped with an infrared sensor 1 may be arranged in a row of three or more to the left and right. In this case, the number of lenses 21 should be the same as the number of devices.

The optical mechanism 2 in each of the above-described embodiments sets the unit zones using the lenses 21, however, it is also possible for the unit zones to be set by using a combination of lenses and reflectors and the like.

### [Industrial Applicability]

According to the present invention, it is possible to reduce false alarms caused by small animals and the like. In addition, it is possible to narrow the gaps between the unit zones of the respective infrared sensors, and to ensure a high level of human detection accuracy.

### [Description of the Reference Numerals]

- 100: Human Detection Sensor Device
- 1: Infrared Sensor
- 2: Optical Mechanism
- 21: Lens
- 22: Shielding Component
- 3: Determination Mechanism
- 4: Housing
- D: Dual-Type Device
- Q: Quad-Type Device
- X: Detection Area
- Y: Unit Area
- a: Unit Zone
- b: Unit Zone
- c: Unit Zone

## Claims

1. A human detection sensor device that is mounted at a position higher than a ground surface or a floor surface and that detects a person who has entered a predetermined detection area, comprising:
three or more infrared sensors that each independently detect an amount of variation in incident infrared light;
an optical mechanism that sets unit zones, which are angular ranges of infrared light that is incident on the infrared sensors; and
a determination mechanism that outputs a human detection signal indicating that fact that a human has been detected based on the amount of variation in the incident infrared light detected by the infrared sensors, wherein
the optical mechanism forms a unit area in which the unit zones of the respective infrared sensors are arranged one above the other, and also forms the detection area in which a plurality of the unit areas are arranged vertically, and,
in a case in which the determination mechanism has determined that all the amounts of variation in the incident infrared light detected by the respective infrared sensors have exceeded a predetermined level, then the determination mechanism outputs the human detection signal.

2. The human detection sensor device according to Claim 1, wherein the infrared sensors are configured in such a way that two PIR elements are connected in series in reverse polarity, and wherein
the total of three infrared sensors are achieved by using a quad-type device in which two infrared sensors are provided side-by-side within a single casing, and a dual-type device in which one infrared sensor is provided in a single casing.

3. The human detection sensor device according to Claim 2, wherein the unit areas are formed such that the unit zones of the dual-type infrared sensor are positioned between the unit zones of the two quad-type infrared sensors.

4. The human detection sensor device according to Claim 1, wherein three of the infrared sensors are used, and
the placement sequence of the unit zones within a unit area differs between the unit areas for long-range detection which are located on the upper side from among the unit areas, and the unit areas for short-range detection which are located on the lower side from among the unit areas.

5. The human detection sensor device according to Claim 1, wherein a first level and a second level that is lower than the first level are set as the predetermined levels, and
the determination mechanism outputs the human detection signal in a case in which it determines that a certain number of the incident infrared ray variation amounts detected by the respective infrared ray sensors exceed the first level, and the remainder thereof exceed the second level.

6. The human detection sensor device according to Claim 1, wherein a structure is employed in which, within the detection area,
objects exceeding a certain height interfere with the unit zones of the respective infrared sensors, and
objects that are below the certain height and are also within a predetermined size when looked at in plan view interfere only with the unit zones of a portion of the infrared sensors from among the respective infrared sensors, or alternatively do not interfere with the unit zones of any of the infrared sensors.
